# FASCICULE DE BREVET EUROPEEN

(11) **EP 0 870 279 B1**
(45) Date de publication et mention de la délivrance du brevet: **25.07.2001**
(21) Numéro de dépôt: 96944094.0
(22) Date de dépôt: 27.12.1996
(51) Int. Cl.: G06K 19/07

(54) **DISPOSITIF PORTATIF D'ACCES A AU MOINS UN SERVICE DISPENSE PAR UN SERVEUR**
TRAGBARE VORRICHTUNG ZUM ZUGRIFF AUF ZUMINDEST EINEN VON EINEM SERVER GELIEFERTEN DIENST
PORTABLE DEVICE FOR ACCESS TO AT LEAST ONE SERVICE PROVIDED BY A SERVER

(30) Priorité: 29.12.1995 FR 9515735
(43) Date de publication de la demande: 14.10.1998
(73) Titulaire: ELVA SA, 92100 Boulogne (FR)
(72) Inventeur: COLNOT, Cédric, F-94200 Ivry-sur-Seine (FR)
(74) Mandataire: Doireau, Marc
(86) Numéro de dépôt international: FR9602094
(87) Numéro de publication internationale: WO9724695

(56) Documents cités:
- EP-A- 0 664 633
- EP-A- 0 687 119
- DE-A- 3 935 364
- DE-C- 4 406 704
- US-A- 4 223 830

## Description

La présente invention concerne un dispositif portatif d'accès à au moins un service dispensé par un serveur.

L'avènement dans les années 1970 du concept de la carte à microcircuits électroniques, couramment dénommée maintenant carte à mémoire ou carte à puce qui intègre notamment une mémoire non volatile du type EEPROM et un microprocesseur, a permis d'entrevoir de nombreuses applications notamment axées vers le domaine grand public avec l'apparition des publiphones à carte, puis des terminaux bancaires qui mettent à profit les possibilités offertes par le microprocesseur de la carte.

D'une manière générale, la carte peut être utilisée comme une simple clé d'accès à un service, personnalisée ou non et sécurisée ou non, et/ou comme un moyen pour valider un transfert d'informations confidentielles ou non et à distance ou non entre deux cartes, entre une carte et un terminal, ou entre deux terminaux, par exemple.

Dans la plupart des applications envisagées, l'accès à un service ou un transfert d'informations est précédé par l'exécution d'un protocole d'identification du type unidirectionnel ou bi-directionnel qui prend en compte au moins une information spécifique préenregistrée dans la mémoire de la carte.

L'information spécifique prise en compte dans un protocole d'identification peut être un code confidentiel ou "PIN CODE" qui est attribué au porteur de la carte et qui permet au microprocesseur de la carte d'identifier ledit porteur avant de lui autoriser l'accès au service demandé, comme dans le cas d'une transaction bancaire, par exemple.

L'information spécifique prise en compte dans un protocole d'identification peut être également un code propre au service demandé par le porteur de la carte. Dans ce cas, le code contenu dans la carte est transmis à distance ou non à un serveur pour identification. Le protocole d'identification est soit unidirectionnel lorsque le serveur autorise l'accès au service demandé à partir de la reconnaissance du seul code transmis par la carte, soit bi-directionnel lorsque le serveur autorise l'accès au service demandé après échange de différents codes calculés séparément dans la carte et dans le serveur, ces codes prenant en compte une clé secrète et/ou des nonbres aléatoires, par exemple.

Ainsi, lorsque l'accès à un service se fait à distance à partir d'un code transmis par la carte à un serveur avec exécution d'un protocole d'identification du type unidirectionnel, on a envisagé d'utiliser des cartes dites vocales où le code pré-enregistré dans la carte est converti en signaux sonores puis transmis sur une ligne téléphonique au travers du microphone d'un combiné téléphonique. Une telle carte vocale est notamment décrite dans le document US-A-4,126,768.

D'une manière générale, la carte est également équipée d'autres moyens d'identification constitués par une ou plusieurs pistes magnétiques et des informations embossées, mais ces moyens ne sont pas pris en compte dans le cadre de la présente invention.

Le but de l'invention est de concevoir un type nouveau de dispositif portatif ayant les dimensions d'une carte de crédit et qui puisse notamment permettre la mise en oeuvre d'au moins deux processus de lecture et de transmission d'un code d'identification attaché à la délivrance d'au moins un service et contenu dans le dispositif portatif.

Selon le document DE-A-3 935 364, une carte à puce comprend notamment des circuits de traitement, une interface d'entrée-sortie à contacts, une interface d'entrée-sortie sans contact et un circuit de détection pour commuter les circuits de traitement sur celle des interfaces qui reçoit une tension d'alimentation.

Un autre but de l'invention est de valider le fonctionnement de premiers ou de seconds circuits, indépendamment du fait de la présence de deux interfaces d'entrée-sortie dont l'une est sans contact.

Pour atteindre ces buts, l'invention propose un dispositif portatif d'accès à au moins un service dispensé par un serveur, ce dispositif se présentant sous la forme d'un support plan aux dimensions d'une carte de crédit, ce support comprenant des premiers circuits électroniques qui sont connectés à une interface de sortie sans contact d'une part et à une interface d'entrée/sortie à contacts d'autre part, pour échanger des informations selon un mode de dialogue synchrone avec un serveur, caractérisé en ce que le support comprend des seconds circuits électroniques qui sont montés en parallèle sur l'interface d'entrée/sortie pour échanger des informations selon un mode de dialogue asynchrone avec le serveur, et en ce qu'il comprend également un circuit de détection d'un signal d'activation émis par un lecteur d'un terminal connecté au serveur pour valider le fonctionnement des premiers circuits ou des seconds circuits suivant que la fréquence du signal d'activation est inférieure ou supérieure à une valeur prédéterminée.

D'une manière générale :
- le signal d'activation peut être un signal d'horloge, et
- le fonctionnement des premiers circuits est validé lorsque la fréquence du signal d'activation est inférieure à 1MHz, et de préférence inférieure à 100 KHz, alors que celui des seconds circuits est validé lorsque ladite fréquence est supérieure à 1 MHz.

D'une manière générale, les premiers circuits électroniques du dispositif portatif comprennent au moins une mémoire non volatile du type EEPROM dans laquelle sont enregistrées des informations confidentielles ou non.

Dans le cadre de l'invention, on va plus particulièrement considérer un code d'identification enregistré dans cette mémoire et qui doit être transmis à distance ou non à un serveur, puis vérifié suivant un protocole d'identification lancé par le serveur avant d'autoriser l'accès à un service ou un transfert d'informations, par exemple.

Il est également important de noter que ce code d'identification émis par le dispositif portatif permet à un serveur d'identifier ce dispositif portatif, alors que le "PIN CODE" permet d'identifier le porteur du dispositif portatif.

D'une manière générale, les premiers circuits électroniques comprennent, en plus de la mémoire non volatile, un générateur de fréquences et des circuits de traitement.

Selon un mode préférentiel de réalisation de l'invention, le générateur des premiers circuits électroniques est un générateur de fréquences vocales et ces premiers circuits sont associés à un transducteur électro-acoustique et une pile pour constituer une unité vocale, la membrane du transducteur formant alors l'interface de sortie sans contact pour transmettre le code d'identification au serveur par un téléphone et le réseau téléphonique.

En variante, le générateur des premiers circuits électroniques est un générateur de fréquences radio et ces premiers circuits sont associés à une antenne et une pile pour constituer une unité radio fréquence, cette antenne formant alors l'interface de sortie sans contact pour émettre le code d'identification précité jusqu'à une borne radio connectée au serveur.

L'unité vocale ou l'unité radio-fréquence sont actionnées par une touche de commande tactile portée par le dispositif portatif pour transmettre au serveur le code d'identification contenu dans la carte via l'interface de sortie sans contact, sachant que ce même code d'identification peut être également transmis au serveur via l'interface d'entrée/sortie à contacts sous la commande d'un lecteur auquel le dispositif portatif est connecté.

Avantageusement, les premiers circuits électroniques sont intégrés dans une puce qui est rapportée sur un circuit d'interconnexion, ce circuit établissant les liaisons électriques nécessaires entre la puce, le transducteur électro-acoustique de l'unité vocale ou l'antenne de l'unité radio-fréquence, la pile et l'interface d'entrée/sortie à contacts.

Ainsi, selon un avantage important de l'invention, le dispositif portatif peut être utilisé dans un contexte multi-lecture où un code d'identification contenu dans la carte peut être indifféremment transmis à un serveur via l'interface de sortie sans contact ou via l'interface d'entrée/sortie à contacts, ce qui augmente considérablement le champ d'application d'un tel dispositif portatif.

Selon encore un autre avantage de l'invention, l'interface d'entrée/sortie à contacts de l'unité vocale ou l'unité radio-fréquence permet d'initialiser les mémoires de ces unités avant utilisation de la carte, et de modifier ou d'écrire des informations dans ces mémoires en cours d'utilisation de la carte.

Selon un premier exemple, les deux interfaces d'entrée/sortie à contacts des premiers et seconds circuits électroniques, sont interconnectées en parallèle au moyen du lecteur d'un terminal connecté au serveur et dans lequel est introduit le dispositif portatif.

Selon un second exemple, les deux interfaces d'entrée/sortie à contacts des premiers et seconds circuits électroniques, sont confondues pour ne former qu'une seule interface d'entrée/sortie à contacts sur laquelle lesdits circuits sont montés en parallèle et qui est destinée à coopérer avec le lecteur dans lequel est introduit le dispositif portatif .

Les premiers et seconds circuits électroniques étant montés en parallèle lorsque leurs interfaces respectives d'entrée/sortie à contacts sont connectées au lecteur, le circuit de détection de, fréquence des premiers circuits et un signal de remise à zéro sont utilisés pour permettre au lecteur de dialoguer avec les premiers circuits selon un mode synchrone ou avec les seconds circuits selon un mode asynchrone sans perturber les seconds ou premiers circuits et ce, sans apporter une quelconque modification de structure aux seconds circuits.

D'une manière avantageuse, les seconds circuits électroniques sont intégrés dans une puce, et cette puce est rapportée sur le circuit d'interconnexion sur lequel est déjà rapportée la puce qui intègre les premiers circuits électroniques.

Les seconds circuits électroniques peuvent être avantageusement constitués par une puce standard conçue pour les cartes bancaires, PME (Porte-Monnaie Electronique) ou santé, sans qu'il soit nécessaire de concevoir une puce unique regroupant les premiers et seconds circuits électroniques.

Ainsi, selon encore un autre avantage très important de l'invention, une carte standard avec une puce à microprocesseur peut être transformée en une carte à puce multi-lecture en lui intégrant une unité vocale ou radio-fréquence, une telle transformation pouvant être mise en oeuvre très facilement et en ne prévoyant par exemple qu'un seul circuit d'interconnexion capable de recevoir deux puces.

D'autres avantages, caractéristiques et détails de l'invention ressortiront de la description explicative qui va suivre et faite en référence aux dessins annexés, donnés uniquement à titre d'exemple et dans lesquels :
- la figure 1 illustre schématiquement les principaux circuits d'un dispositif portatif,
- la figure 2 illustre schématiquement plusieurs applications du dispositif portatif,
- la figure 3 illustre schématiquement les principaux circuits d'un dispositif portatif selon un mode de réalisation de l'invention, et
- la figure 4 est un schéma de principe montrant les canaux reliant le dispositif portatif à un lecteur dans le mode de réalisation illustré sur la figure 3.

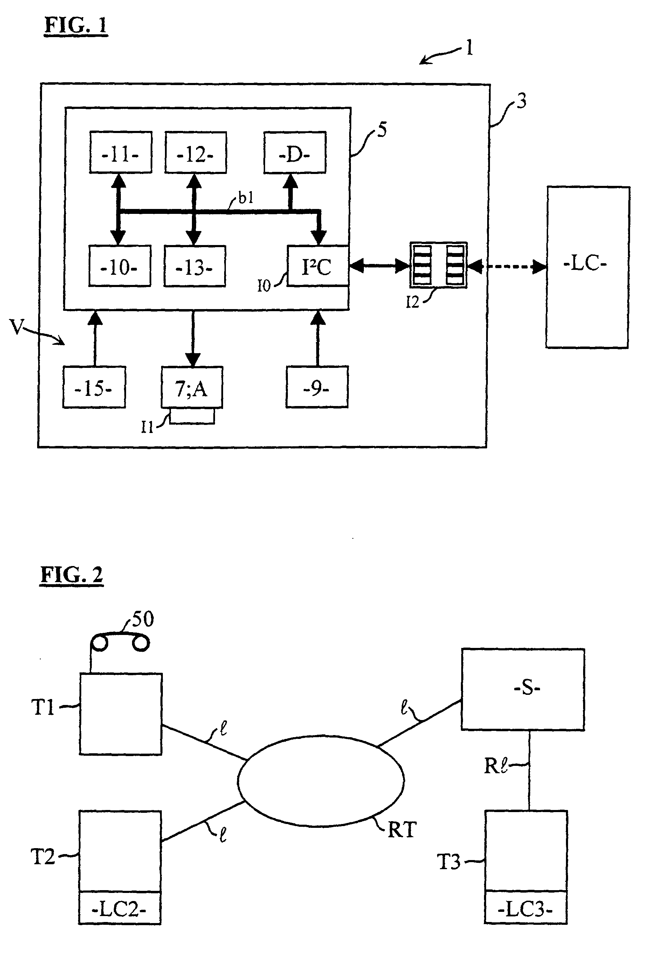

Le dispositif portatif ou carte 1 tel qu'illustré à la figure 1, se présente sous la forme d'un support plan 3 aux dimensions d'une carte de crédit normalisée.

Le support 3 comprend au moins des premiers circuits électroniques 5 qui sont connectés à une interface de sortie I1 sans contact d'une part et à une interface d'entrée/sortie I2 à contacts d'autre part.

Selon la figure 1, les premiers circuits électroniques 5 sont associés à un transducteur électro-acoustique 7, du type piézo-électrique par exemple, et une pile 9 pour former une unité vocale V. Dans ce cas, c'est la membrane du transducteur 7 qui forme l'interface de sortie I1 sans contact.

Le transducteur 7 et la pile 9 sont des composants standards, dont le choix est basé sur un faible encombrement de manière à pouvoir les intégrer dans les dimensions normalisées de la carte, ainsi que sur leur capacité à supporter des déformations mécaniques que la carte pourrait subir.

Les premiers circuits électroniques 5 comprennent notamment une mémoire non volatile 10 du type EEPROM, un oscillateur pilote 11, un générateur 12 de fréquences vocales du type DTMF par exemple, et des circuits de traitement 13. Ces premiers circuits 5 sont interconnectés par un bus bl de commande, d'adresses et de données. Une interface synchrone de liaison I0 du type I²C par exemple, est connectée sur le bus bl pour relier ce dernier à l'interface d'entrée/sortie I2 à contacts. Les contacts de cette interface I2 sont directement accessibles sur l'une des faces du support 3.

Les premiers circuits 5 sont avantageusement intégrés dans une puce qui est rapportée sur un circuit d'interconnexion. Ce circuit non représenté assure les différentes connexions entre cette puce, le transducteur 7, la pile 9, l'interface de liaison I0 et l'interface d'entrée/sortie I2 à contacts.

L'unité vocale V est complétée par une touche de commande tactile 15 rapportée sur le circuit d'interconnexion. Cette touche 15 est utilisée pour déclencher le fonctionnement de l'unité vocale V et l'émission d'un code d'identification enregistré dans la mémoire 10.

L'interface d'entrée/sortie I2 à contacts est notamment utilisée pour assurer l'initialisation de l'unité vocale V, c'est-à-dire pré-enregistrer des informations dans la mémoire 10 des premiers circuits électroniques 5. Dans le contexte de l'invention, ces opérations d'initialisation consistent, en particulier, à écrire au moins le code d'identification dans cette mémoire 10. Ce code est destiné à être transmis par l'une ou l'autre des deux interfaces I1 et 12 pour permettre l'identification de la carte 1 par un serveur S dans le cadre d'une application donnée.

D'une manière générale, ces opérations d'initialisation sont réalisées par une personne dûment habilitée avant la distribution des cartes, sachant que certaines des informations enregistrées peuvent être modifiées ou de nouvelles informations peuvent être décrites au cours de la période d'utilisation de la cartes 1.

Concrètement, par suite de l'actionnement de la touche 15, le code d'identification enregistré dans la mémoire 10 est transformé en une séquence d'identification qui, par l'intermédiaire du transducteur 7, est émise sous forme acoustique dans le but d'être transmise jusqu'à un serveur S au moyen d'un téléphone et du réseau téléphonique, comme cela sera explicité plus loin. Par contre, lorsque la carte 1 est connectée à un lecteur LC par son interface d'entrée/sortie I2 à contacts, la transmission de cette séquence d'identification s'effectue de manière classique.

Une telle carte 1 avec une interface d'entrée/sortie à contacts et une interface de sortie sans contact peut être ainsi utilisée dans un contexte multi-lecture tel que celui qui est schématiquement illustré sur la figure 2.

Sur cette figure 2, on a représenté :
- un poste téléphonique T1 avec un conbiné 50, qui est implanté au domicile d'un utilisateur par exemple,
- un terminal T2 équipé d'un lecteur LC2, ce terminal T2 accessible au public étant par exemple un publiphone, et
- un serveur S géré par un organisme habilité.

Ces terminaux T1, T2 et le serveur S sont par exemple reliés par des lignes 1 au réseau téléphonique RT. Enfin, on a également illustré sur cette figure 2, un terminal T3 équipé d'un lecteur LC3, ce tezminal T3 étant par exemple un terminal bancaire accessible au public et relié au serveur S par un réseau local R1, sachant que cette liaison pourrait tout aussi bien être assurée par le réseau téléphonique RT.

La carte 1 équipée de son unité vocale V permet deux types d'identification en utilisant soit l'interface d'entrée/sortie I2 à contacts soit l'interface de sortie I1 sans contact, comme cela va ressortir des deux exemples décrits ci-après en référence à la figure 2.

Selon un premier exemple, un utilisateur en possession de la carte 1 peut accéder depuis son domicile à un service délivré par le serveur S en utilisant le poste téléphonique T1.

Une fois que l'utilisateur a établi une communication avec le serveur S par suite de la composition d'un numéro d'appel depuis le clavier du téléphone T1 par exemple, le serveur S va lancer un processus d'identification à distance de la carte 1.

Le serveur demande en effet à l'utilisateur de lui communiquer le code d'identification de sa carte pour obtenir l'accès au service délivré par le serveur S. A cet effet, l'utilisateur approche le transducteur électro-acoustique 7 du microphone du combiné 50 et appuie ensuite sur la touche tactile 15 pour déclencher le fonctionnement de l'unité vocale V. Ainsi, le code d'identification de la carte 1 est transmis par le réseau téléphonique RT jusqu'au serveur S qui, assure le contrôle de ce code d'identification à partir d'informations contenues dans un fichier préalablement constitué.

Une fois ce code d'identification validé par le serveur S, un dialogue peut s'établir entre l'utilisateur et le serveur S via le téléphone T1 et ce, selon un processus qui est fonction de l'application envisagée.

Selon un second exemple, l'utilisateur connecte sa carte 1 au lecteur LC2 du terminal T2, et la lecture du code d'identification se fait via l'interface d'entrée/sortie à contacts I2. Le code est ensuite transmis au serveur S par le terminal T2 via le réseau téléphonique RT.

En variante, l'unité vocale V de la carte 1 peut être remplacée par une unité radio-fréquence RF.

Dans cette variante, le générateur 12 est un générateur de fréquences radio et le transducteur électro-acoustique 7 est remplacé par une antenne A qui est formée sur le circuit d'interconnexion. Ainsi, lorsque la touche tactile 15 est actionnée, la séquence d'identification correspondant au code enregistré dans la mémoire 10, est transmise par l'antenne A jusqu'à une borne radio qui est connectée au serveur S.

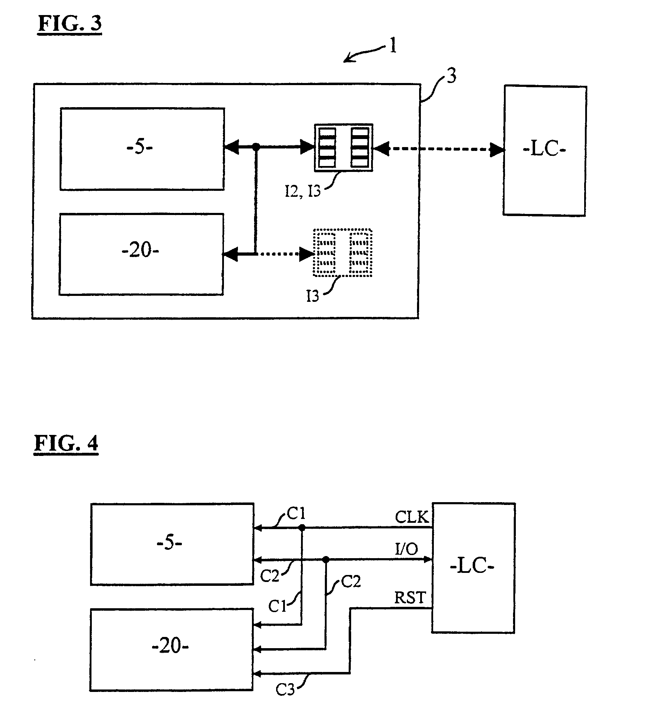

Selon un mode de réalisation illustré sur la figure 3, le support 3 comprend également des seconds circuits électroniques 20 qui sont connectés à une interface d'entrée/sortie I3 à contacts. Ces seconds circuits 20 forment un microcontrôleur MC par exemple, qui peut être utilisé pour échanger des informations selon un mode asynchrone avec un serveur via l'interface d'entrée/sortie I3 à contacts. Ce microcontrôleur MC peut être avantageusement intégré dans une puce qui est rapportée sur un circuit d'interconnexion du support 3 pour assurer les liaisons électriques de cette puce avec l'interface d'entrée/sortie I3 à contacts.

De façon préférentielle, les deux circuits d'interconnexion respectivement associés au premiers et au seconds circuits électroniques 5 et 20, sont conçus de manière à ne former qu'un seul circuit.

Le microcontrôleur MC peut être constitué par une puce standard telle que celle utilisée dans les cartes bancaires, santé ou PME, par exemple.

Dans un premier exemple de ce mode de réalisation, les deux interfaces d'entrée/sortie à contacts I1 et I3 sont placées côte à côte sur une même face du support 3 et sont interconnectées en parallèle au moyen d'un lecteur LC d'un terminal connecté à distance ou non au serveur S.

Dans un second exemple de ce mode de réalisation, les deux interfaces d'entrée/sortie à contacts I2 et I3 sont confondues pour ne former qu'une seule interface sur laquelle les premiers et seconds circuits 5 et 20 sont connectés en parallèle.

Cependant, lorsque la carte 1 est introduite dans le lecteur, ce qui implique une connexion avec le lecteur par la ou les deux interfaces d'entrée/sortie à contacts I2 et I3 de la carte 1, il faut impérativement prévoir des moyens sélectifs pour permettre au lecteur de dialoguer soit avec les premiers circuits 5 de la puce associée à l'unité vocale V ou radio-fréquence RF sans perturber les seconds circuits 20 de la puce du microcontrôleur MC, soit avec les seconds circuits 20 sans perturber les premiers circuits 5.

Concrètement, les premiers circuits électroniques 5 de l'unité vocale V ou radio-fréquence RF, sont des circuits synchrones qui, selon la norme ISO 7816-3, fonctionnent à une fréquence d'horloge inférieure à 100 kHz, et n'ont pas nécessairement de signal de remise à zéro ("reset" en langue anglaise), alors que les seconds circuits électroniques 20 ou microcontrôleur MC sont des circuits asynchrones qui fonctionnent, toujours selon cette norme, à une fréquence d'horloge supérieure à 1 MHz et qui ont un signal de remise à zéro.

Dans ces conditions et selon un exemple de réalisation, les moyens sélectifs précités sont constitués par un circuit de détection D de la fréquence d'un signal d'horloge émis par le lecteur auquel la carte est connectée.

Ainsi, lorsque le lecteur veut dialoguer avec les premiers circuits synchrones 5 de l'unité vocale V ou radio-fréquence RF, le lecteur positionne le signal de remise à zéro dans son état actif pour inhiber le fonctionnement des seconds circuits asynchrones 20, et émet un signal d'horloge à une fréquence inférieure à 1 MHz, de préférence inférieure à 100 kHz, qui est détecté par le détecteur D pour rendre actifs les premiers circuits 5.

Inversement, lorsque le lecteur veut dialoguer avec les seconds circuits asynchrones 20, il envoie tout simplement un signal d'horloge supérieur à 1 MHz qui est détecté par le circuit de détection D pour rendre les premiers circuits 5 inactifs, alors que les seconds circuits' vont être rendus actifs en positionnant le signal de remise à zéro dans son état inactif.

En se reportant à la figure 4, on a schématisé les canaux préls entre le lecteur LC et les premiers et seconds circuits 5 et 20 pour mettre en oeuvre les dialogues précités, à savoir :
- un canal C1 commun aux premiers et seconds circuits 5 et 20 pour la transmission du signal d'horloge CLK,
- un canal C2 (I/O) commun aux premiers et seconds circuits 5 et 20 pour la transmission des informations, et
- un canal C3 entre les seconds circuits 20 et le lecteur LC pour permettre à ce dernier de commander l'état du signal de remise à zéro RST de ces seconds circuits 20.

Concrètement, lorsque les premiers circuits 5 sont inactifs, la sortie de ces circuits 5 sur le canal C2 de données est à haute impédance, ce qui permet aux seconds circuits 20 d'échanger des informations via ce canal C2, et inversement.

Ce circuit de détection D est intégré aux premiers circuits 5.

Ainsi, le dispositif portatif ou carte 1 à deux puces selon ce mode de réalisation permet d'augmenter les possibilités offertes jusqu'à maintenant avec les cartes à puce standards, sans qu'il soit nécessaire de développer une seule puce intégrant toutes ces possibilités.

A titre d'exemple, en se reportant à nouveau à la figure 2, la carte 1 à deux puces permet d'entrevoir des applications nouvelles où, pour une même application, les deux puces peuvent être successivement utilisées.

Dans un premier temps, l'utilisateur peut réserver un billet d'avion depuis son domicile en utilisant un téléphone T1 (premier exemple précité). Dans un second temps, une fois à l'aéroport par exemple, l'utilisateur peut confirmer sa réservation en se faisant délivrer le billet et acquitter le prix de ce billet après avoir introduit sa carte 1 dans le lecteur LC3 du terminal T3. L'opération de confirmation et de délivrance du billet est effectuée à partir des premiers circuits électroniques 5 de l'unité vocale V de la carte 1, alors que l'opération de paiement est effectuée à partir des seconds circuits électroniques 20, la carte 1 est alors utilisée comme un moyen de paiement classique sans .changer de carte.

Ainsi, une carte selon l'invention présente les caractéristiques nécessaires pour constituer un nouveau type de carte multi-services.

Bien entendu, l'Invention n'est pas limitée aux modes de réalisation précédemment décrits. En particulier, lorsque le dispositif portatif est introduit dans un lecteur, la validation du fonctionnement des premiers circuits 5 pourrait être basée sur la détection d'un signal d'activation autre que le signal d'horloge émis par le lecteur LC.

## Revendications

1. Dispositif portatif d'accès à au moins un service dispensé par un serveur, ce dispositif se présentant sous la forme d'un support plan (3) aux dimensions d'une carte de crédit, ce support (3) comprenant des premiers circuits électroniques (5) qui sont connectés à une interface de sortie (Il) sans contact d'une part et à une interface d'entrée/sortie (I2) à contacts d'autre part, pour échanger des informations selon un mode de dialogue synchrone avec un serveur (S), caractérisé en ce que le support (3) comprend des seconds circuits électroniques (20) qui sont montés en parallèle sur l'interface d'entrée/sortie (I2) pour échanger des informations selon un mode de dialogue asynchrone avec le serveur (S), et en ce qu'il comprend également un circuit de détection (D) d'un signal d'activation émis par un lecteur (LC) d'un terminal connecté au serveur (S) pour valider le fonctionnement des premiers circuits (5) ou des seconds circuits (20) suivant que la fréquence du signal d'activation est inférieure ou supérieure à une valeur prédéterminée.

2. Dispositif portatif selon la revendication 1, caractérisé en ce que le signal d'activation est un signal d'horloge.

3. Dispositif portatif selon la revendication 1 ou 2, caractérisé en ce que le fonctionnement desdits premiers circuits (5) est validé lorsque la fréquence du signal d'activation est inférieure à 1 MHz et de préférence inférieure à 100 KHz

4. Dispositif portatif selon la revendication 1 ou 2, caractérisé en ce que le fonctionnement desdits seconds circuits (20) est validé lorsque la fréquence du signal d'activation est supérieure à 1 MHz.

5. Dispositif portatif selon l'une quelconque des revendications précédentes, caractérisé en ce que les premiers circuits (5) comprennent notamment une mémoire non volatile (10) du type EEPROM dans laquelle est au moins enregistré un code d'identification pour accéder au service délivré par le serveur (S), un générateur de fréquences (12) et des circuits de traitement (13).

6. Dispositif portatif selon la revendication 5, caractérisé en ce que le générateur de fréquences (12) est un générateur de fréquences vocales, et en ce que les premiers circuits électroniques (5) sont associés à un transducteur électro-acoustique (7) et une pile (9) pour constituer une unité vocale (V), la membrane du transducteur (7) formant alors l'interface de sortie (I1) sans contact pour transmettre le code d'identification au serveur (S) via un poste téléphonique (T1) et le réseau téléphonique (RT).

7. Dispositif portatif selon la revendication 5, caractérisé en ce que le générateur (12) est un générateur de fréquences radio, et en ce que les premiers circuits (5) sont associés à une antenne (A) et une pile (9) pour constituer une unité radio-fréquence (RF), l'antenne (A) formant alors l'interface de sortie (I1) sans contact pour transmettre le code d'identification à une borne radio connectée au serveur (S).

8. Dispositif portatif selon la revendication 6 ou 7, caractérisé en ce que l'unité vocale (V) ou l'unité radio-fréquence (RF) est actionnée par une touche de commande tactile (15) portée par le dispositif portatif.

## Patentansprüche

1. Tragbare Einrichtung für den Zugang zu wenigstens einem Service, der durch eine Bedieneinheit erteilt wird, wobei diese Einrichtung in der Form eines ebenen Trägers (3) mit den Dimensionen einer Kreditkarte gestaltet ist, und wobei dieser Träger (3) erste Elektronikschaltungen (5) enthält, die zum Austauschen von Informationen gemäß einem Synchrondialogmodus mit einer Bedieneinheit (S) einerseits mit einer kontaktlosen Ausgangsschnittstelle (I1) und andererseits mit einer Kontakte aufweisenden Eingangs-/Ausgangs-Schnittstelle (12) verbunden sind, dadurch **gekennzeichnet**, daß der Träger (3) parallel zu der Eingangs-/Aus-gangs-Schnittstelle (I2) eingebaute zweite Elektronikschaltungen (20) zum Austauschen von Informationen gemäß einem Asynchrondialogmodus mit der Bedieneinheit (S) umfaßt, und daß er außerdem eine Detektionsschaltung (D) für ein Aktivierungssignal umfaßt, das durch eine Leseeinrichtung (LC) eines Terminals, welcher mit der Bedieneinheit (S) verbunden ist, zum Validieren des Funktionierens der ersten Schaltungen (5) oder der zweiten Schaltungen (20), je nachdem, ob die Frequenz des Aktivierungssignals unterhalb oder oberhalb eines vorbestimmten Werts ist, ausgesandt wird.

2. Tragbare Einrichtung gemäß Anspruch 1, dadurch **gekennzeichnet**, daß das Aktivierungssignal ein Taktsignal ist.

3. Tragbare Einrichtung gemäß Anspruch 1 oder 2, dadurch **gekennzeichnet**, daß das Funktionieren der ersten Schaltungen (5) validiert wird, wenn die Frequenz des Aktivierungssignals unter 1 MHz und vorzugsweise unter 100 kHz ist.

4. Tragbare Einrichtung gemäß Anspruch 1 oder 2, dadurch **gekennzeichnet**, daß das Funktionieren der zweiten Schaltungen (20) validiert wird, wenn die Frequenz des Aktivierungssignals oberhalb von 1 MHz ist.

5. Tragbare Einrichtung gemäß irgendeinem der vorhergehenden Ansprüche, dadurch **gekennzeichnet**, daß die ersten Schaltungen (5) insbesondere einen nichtflüchtigen Speicher (10) vom Typ EEPROM, in welchem wenigstens ein Identifizierungscode für den Zugang zu dem von der Bedieneinheit (S) erteilten Service gespeichert ist, sowie einen Frequenzgenerator (12) und Behandlungs- bzw. Verarbeitungsschaltungen (13) enthalten.

6. Tragbare Einrichtung gemäß Anspruch 5, dadurch **gekennzeichnet**, daß der Frequenzgenerator (12) ein Generator für Sprachfrequenzen ist, und daß die ersten elektronischen Schaltungen (5) mit einem elektroakustischen Wandler (7) und einer Batterie (9) verbunden sind, um eine Spracheinheit (V) zu bilden, wobei die Membrane des Wandlers (7) dann die kontaktlose Ausgangsschnittstelle (I1) zum Übertragen des Identifizierungscodes zu der Bedieneinheit (S) über einen Telefonapparat (T1) und das Telefonnetz (RT) bildet.

7. Tragbare Einrichtung gemäß Anspruch 5, dadurch **gekennzeichnet**, daß der Generator (12) ein Hochfrequenzgenerator ist, und daß die ersten Schaltungen (5) mit einer Antenne (A) und einer Batterie (9) verbunden sind, um eine Hochfrequenzeinheit (RF) zu bilden, wobei die Antenne (A) dann die kontaktlose Ausgangs schnittstelle (I1) zum Übertragen des Identifizierungscodes zu einem mit der Bedieneinheit (S) verbundenen Radio- bzw. Hochfrequenzanschluß bildet.

8. Tragbare Einrichtung gemäß Anspruch 6 oder 7, dadurch **gekennzeichnet**, daß die Sprecheinheit (V) oder die Hochfrequenzeinheit (RF) durch eine taktile Befehlstaste (15) betätigt wird, welche die tragbare Einrichtung aufweist.

## Claims

1. A portable device for access to at least one server dispensed service which takes the form of a plane support (3) having the dimensions of a credit card, this support (3) comprising first electronic circuits (5) which are connected, on the one hand, to a contact-less output interface (I1), and on the other to an input/output interface with contacts (I2) in order to exchange information with the server (S) using a synchronous dialog mode, characterised in that the support (3) comprises second electronic circuits (20) which are mounted in parallel on the input/output interface (I2) in order to exchange information with the server (S) using an asynchronous dialog mode, and that it also comprises a detection circuit (D) for a trigger signal emitted by a reader (LC) of a terminal connected to the server (S) used to validate the functioning of the first circuits (5) or of the second circuits (20) according to whether the trigger signal frequency is less than or greater than a certain pre-determined level.

2. A portable device according to claim 1, characterised in that the trigger signal is a clock signal.

3. A portable device according to claim 1 or 2, characterised in that the functioning of the said first circuits (5) is validated when the trigger signal frequency is below 1 MHz and preferably below 100 kHz.

4. A portable device according to claims 1 or 2, characterised in that the functioning of the said second circuits (20) is validated when the trigger signal frequency is greater than 1 MHz.

5. A portable device according to any of the preceding claims, characterised in that the first circuits (5) comprise notably a non-volatile memory (10) of the EEPROM type in which at least an identification code for accessing the service delivered by the server (S) is stored, a frequency generator (12) and processing circuits (13).

6. A portable device according to claim 5, characterised in that the frequency generator (12) is a vocal frequency generator, and in which the first electronic circuits (5) are associated with an electro-acoustic transducer (7) and a battery (9) to constitute a voice generator unit (V), the transducer membrane (7) thus forming the contact-less output interface (I1) which transmits the identification code to the server (S) via a telephone (T1) and the telephone network (RT).

7. A portable device according to claim 5, characterised in that the generator (12) is a radio-frequency generator, and the first circuits (5) are associated with an antenna (A) and a battery (9) to constitute a radio-frequency unit (RF), the antenna (A) thus forming the contact-less output interface (I1) which transmits the identification code to a radio receiver connected to the server (S).

8. A portable device according to claim 6 or 7, characterised in that the voice unit (V) or radio-frequency unit (RF) are controlled by a touch-key (15) mounted on the portable device.
